# FASCICULE DE BREVET EUROPEEN

(11) **EP 2 225 853 B1**
(45) Date de publication et mention de la délivrance du brevet: **08.02.2012**
(21) Numéro de dépôt: 08872620.3
(22) Date de dépôt: 09.12.2008
(51) Int. Cl.: H04L 12/26

(54) **MONITEUR DE SYSTÈME DE COMMUNICATION PAR MESSAGES AMÉLIORÉ**
VERBESSERTER MONITOR FÜR EIN MELDUNGSBASIERTES KOMMUNIKATIONSSYSTEM
IMPROVED MESSAGE-BASED COMMUNICATION SYSTEM MONITOR

(30) Priorité: 20.12.2007 FR 0708946
(43) Date de publication de la demande: 08.09.2010
(73) Titulaire: Inria Institut National de Recherche en Informatique et en Automatique, 78150 Le Chesnay (FR)
(72) Inventeur: ABDELNUR, Humbert, Jorge, F-54000 Nancy (FR); STATE, Radu, F-54600 Villers-Les-Nancy (FR); FESTOR, Olivier, F-54660 Liverdun (FR)
(74) Mandataire: Jacobson, Claude
(86) Numéro de dépôt international: PCT/FR2008/001712
(87) Numéro de publication internationale: WO 2009/103872

(56) Documents cités:
- EP-A- 1 788 489
- FR-A- 2 842 970
- MOORE AND PAPAGIANNAKI: "Toward the Accurate Identification of Network Applications"[Online] 2005, XP002495432 Extrait de l'Internet: URL:http://www.springerlink.com/content/re 7ej0uj7eep2htl/fulltext.pdf> [extrait le 2008-09-11]

## Description

L'invention concerne le domaine des communications par messages.

Plus particulièrement, l'invention concerne le traitement de messages au sein d'un réseau de communication, pour déterminer des informations caractéristiques de ces messages à des fins de classification ou autres.

II est connu dans les réseaux informatiques ou de télécommunication d'analyser des messages et de traiter leur contenu pour les router ou pour leur appliquer des règles. Cela est réalisé en allant consulter des champs de messages connus a priori.

Le document EP 1 788 489 décrit une technique de supervision du trafic dans un réseau, selon laquelle des informations sélectionnées sont extraites d'un paquet et traitées de manière à construire une signature qui identifie le flux auquel appartient le paquet et qui sert à reconnaître les paquets éléments de ce flux.

Ce type de solutions demande une connaissance poussée du protocole de communication. Par nature, cela est fortement chronophage, et présente une capacité d'évolution assez limitée.

En outre, l'adaptation de ces solutions est également limitée, comme chaque nouveau protocole exige une nouvelle étude manuelle et le processus n'est pas automatisé. Enfin, plus les protocoles sont complexes, plus la tâche devient compliquée.

Aucune des solutions existantes n'apporte donc satisfaction.

L'invention vient améliorer la situation.

A cet effet, l'invention propose un moniteur de système de communication par messages comprenant un inspecteur capable d'inspecter un message pour déterminer s'il vérifie un motif spécifique d'une source.

Ce moniteur comprend un analyseur capable d'inspecter un flux de communication, pour en tirer une représentation structurée de messages, en correspondance d'une pluralité de règles.

L'inspecteur est agencé pour :
* appliquer un motif stocké à une représentation structurée du message inspecté, pour établir une signature, et
* comparer la signature à des données de référence, pour classifier le message inspecté en cas de correspondance.

L'invention concerne également un moniteur de système de communication par messages, qui comprend :
* un analyseur capable d'inspecter un flux de communication, pour en tirer une représentation structurée de messages, en correspondance d'une pluralité de règles,
* un discriminateur capable de comparer des représentations structurées intéressant plusieurs sources de messages, pour en tirer des motifs sélectifs de sources respectives.

L'invention concerne également un procédé d'analyse de communication par messages, comprenant :
a) l'établissement de motifs sélectifs de sources distinctes,
b) l'analyse d'un nouveau message pour l'associer à l'une des sources distinctes,

L'étape a. comporte :
a1) l'inspection d'une pluralité de messages pour en tirer des représentations structurées en correspondance d'une pluralité de règles,
a2) la recherche de motifs sélectifs de source, à partir de la comparaison de représentations structurées intéressant plusieurs sources.

L'étape b) comporte :
b1) l'association du nouveau message à l'une des sources en comparant les motifs sélectifs à une signature tirée de la représentation structurée associée de ce nouveau message.

Ces moniteurs et ce procédé sont particulièrement intéressants car ils permettent un traitement automatisé de l'identification des messages, quelque soit la complexité du protocole, et sans nécessiter de connaissance plus avancée que leur grammaire.

D'autres caractéristiques et avantages de l'invention apparaîtront mieux à la lecture de la description qui suit, donnée à titre illustratif et non limitatif, et tirée d'exemples représentés sur les dessins sur lesquels :
- la figure 1 représente un exemple de système de communication comprenant un moniteur selon l'invention ;
- la figure 2 représente un procédé mis en oeuvre par le moniteur de la figure 1 ;
- la figure 3 représente une mise en oeuvre particulière d'une première étape de la figure 2 ;
- la figure 4 représente une représentation arborescente structurée obtenue par l'application de l'étape de la figure 3 à un message en exemple ;
- la figure 5 représente une mise en oeuvre particulière d'une deuxième étape de la figure 2 ;
- la figure 6 représente une mise en oeuvre particulière d'une fonction de la figure 5 ;
- la figure 7 représente une mise en oeuvre particulière d'une troisième étape de la figure 2;
- la figure 8 représente une mise en oeuvre particulière d'une fonction de la figure 7 ;
- la figure 9 représente un autre procédé mis en oeuvre par le moniteur de la figure 1 ; et
- la figure 10 représente une mise en oeuvre d'une étape de la figure 9.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La présente description est de nature à faire intervenir des éléments susceptible de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

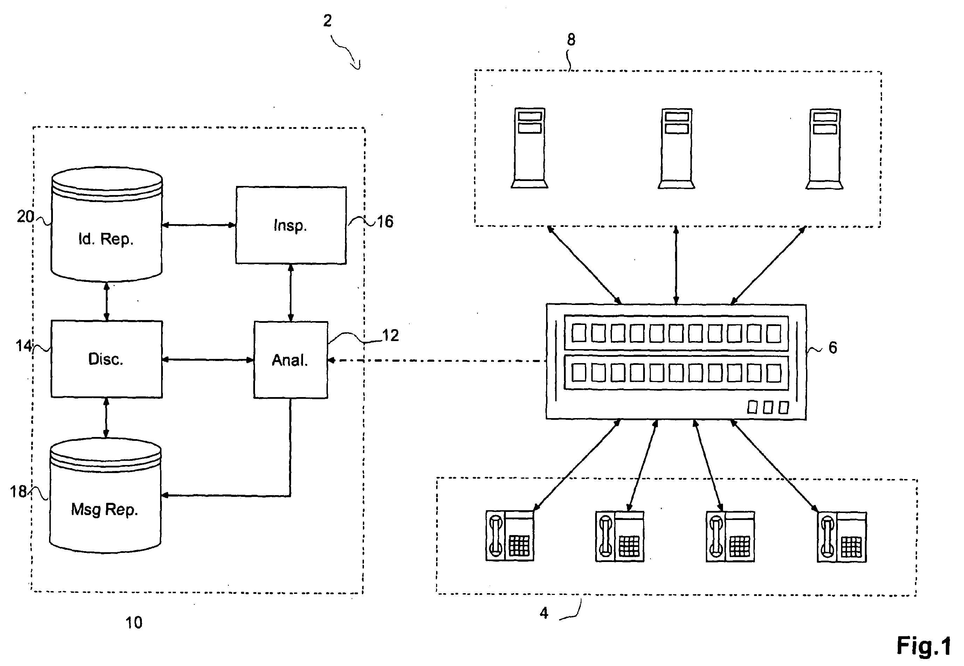

On a représenté sur la figure 1 un système de communication 2 dans lequel un ensemble de téléphones 4 communique par le biais d'un routeur 6 (ou hub) avec des serveurs 8 qui gèrent l'ensemble des communications des téléphones entre eux et avec l'extérieur. Le système 2 comporte également un moniteur de communication 10 qui analyse et classifie des messages échangés au sein de celui-ci.

Le moniteur 10 comporte un analyseur 12, un discriminateur 14, un inspecteur 16, une mémoire de stockage de représentation de messages 18 et une mémoire de stockage de motifs 20. Par la suite, les mémoires 18 et 20 pourront indifféremment être appelées "stockage".

Le moniteur 10 peut être mis en oeuvre de différentes manières dans le système de communication 2. Ainsi, il peut être introduit dans le routeur 6, où il pourra fonctionner par interception, traitement et renvoi des messages reçus par le routeur 6, ou encore par copie de ces messages. Le moniteur 10 peut aussi être introduit dans les serveurs 8, et être utilisé pour la gestion des communications.

Les téléphones 4 communiquent au moyen d'un protocole de communication donné. Ce protocole peut, par exemple être le protocole SIP, bien que d'autres protocoles puissent être envisagés.

L'analyseur 12 a pour fonction d'extraire de chaque message traité par le moniteur 10 une représentation arborescente structurée qui est basée sur la syntaxe du protocole de communication utilisé pour formater ces messages.

Les représentations structurées sont stockées dans le stockage 18 pour accès par le discriminateur 14, afin d'établir des signatures ou empreintes enregistrées dans le stockage 20.

Le discriminateur 14 fonctionne en analysant les différentes manières qu'ont les différents téléphones de mettre en oeuvre le protocole de communication.

Plus précisément, le protocole employé pour la communication est ambigu, en ce sens qu'il met en oeuvre des règles syntaxiques qui peuvent être interprétées de plusieurs manières pour la rédaction des messages.

Ainsi, deux fabricants de téléphones programmeront des micrologiciels (firmwares) distincts pour mettre en oeuvre ce protocole. Cela se constatera par des rédactions de messages différentes pour des messages portant des informations identiques d'un point de vue sémantique.

Le discriminateur détermine donc des signatures ou empreintes caractéristiques de chaque émetteur de message (ou source) distinct, sur la base de l'analyse des représentations arborescentes qui sont stockées dans le stockage 18.

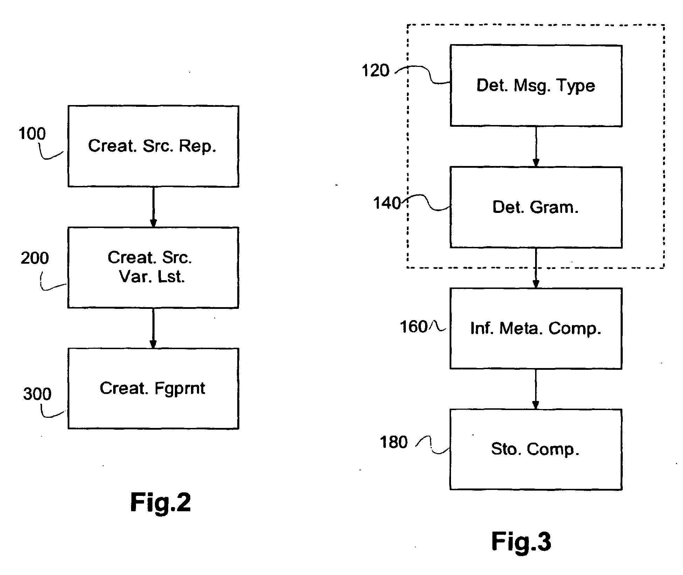

L'ensemble analyseur 12, discriminateur 14, stockages 18 et 20, forment ainsi une partie du moniteur 10 qui est utilisée dans une phase qui sera qualifiée plus tard "d'entraînement", pour établir des signatures caractéristiques.
La phase d'entraînement sera précisée plus avant avec les figures 3 à 8.

L'inspecteur 16 opère en comparant une représentation arborescente structurée d'un message donné avec les signatures du stockage 20. Après cette comparaison, l'inspecteur 16 renvoie un identifiant d'une source. Cette source est considérée avoir émis le message inspecté.

L'ensemble analyseur 12, inspecteur 16 et stockage 20, forment ainsi une partie du moniteur 10 qui est utilisée dans une phase qui sera qualifiée plus tard "d'exécution", pour classifier des messages observés par le moniteur 10 dans le système de communication 2.

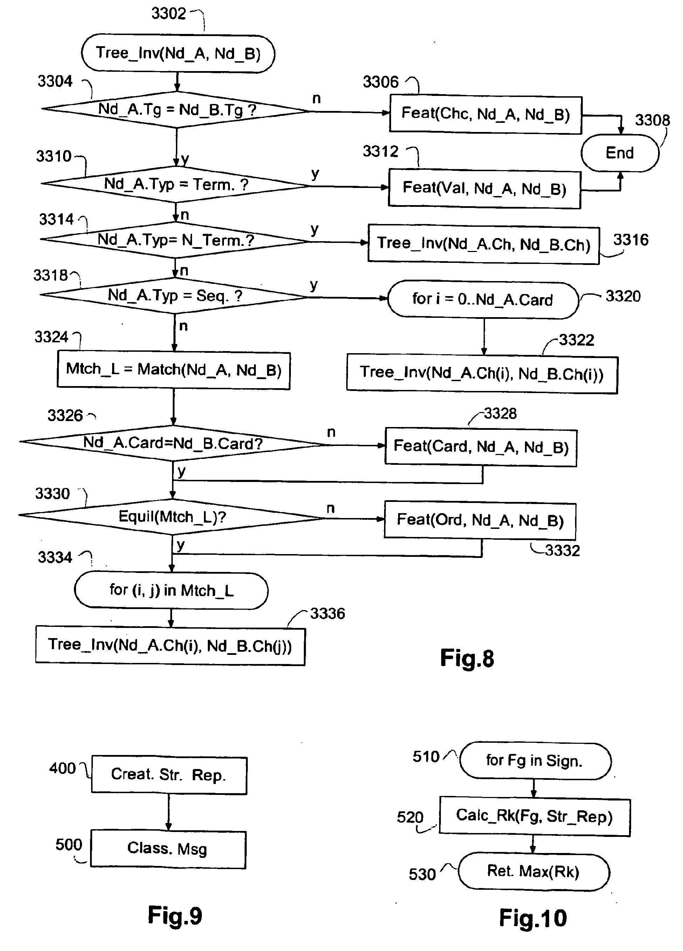

La phase d'exécution sera précisée plus avant avec les figures 9 et 10.

Dans l'exemple décrit plus haut, le moniteur 10 permet donc de réaliser un audit rapide d'un parc téléphonique installé, en établissant d'abord les signatures de chaque type de téléphone sensé être présent sur le parc, et en analysant les signatures de chacun d'entre eux en association avec leur adresse physique.

Cependant, de nombreuses autres applications sont possibles en fonction de l'endroit où est intégré le moniteur 10 comme cela apparaîtra mieux par la suite.

La figure 2 représente un procédé mis en oeuvre par l'analyseur 12 et le discriminateur 14 dans la phase d'entraînement.

La phase d'entraînement comporte trois étapes principales.

Dans une première étape 100, l'analyseur 12 traite un ensemble de messages qui sera qualifié par la suite de "jeu d'entraînement", et stocke les représentations arborescentes correspondantes dans le stockage 18.

Les messages du jeu d'entraînement sont associés aux sources qui les ont émis, c'est-à-dire que l'on sait a priori à quel matériel ils correspondent. Le jeu d'entraînement peut être établi en générant automatiquement des messages conformes au protocole de communication visé.

Dans une étape 200, le discriminateur 14 traite les représentations arborescentes tirées de messages issus d'une même source, et génère une liste d'éléments variants entre ces messages. Cette opération est réalisée pour chacune des sources distinctes de messages.

Enfin, dans une étape 300, le discriminateur 14 compare pour chaque couple possible de sources distinctes entre elles tous les messages de ces sources entre eux. Cette comparaison est utilisée pour établir, à l'appui de la liste d'éléments variants de chaque source, une signature ou empreinte pour chaque source.

Cette signature est stockée dans le stockage 20 et correspond à une liste de chemins de représentations arborescentes assorties pour chaque source distincte d'une valeur de signature caractéristique.

En variante, le jeu d'entraînement est établi de manière répétitive, en ajoutant répétitivement des messages et en effectuant les étapes d'entraînement avec le jeu ainsi constitué.

Un indice de stabilité est calculé après chaque itération de l'entraînement. Cet indice indique si le jeu d'entraînement comporte assez de messages pour établir des signatures suffisamment distinctives ou s'il faut de nouveaux messages.

Cette variante est avantageuse car elle permet d'utiliser un jeu d'entraînement restreint, ce qui est important en termes de performances. En effet, la plupart des protocoles sont extrêmement complexes et un jeu d'entraînement exhaustif serait particulièrement lourd à générer et à traiter.

La figure 3 représente une mise en oeuvre particulière de l'étape 100.

Pour un message donné, la création de sa représentation arborescente correspondante par l'analyseur peut être réalisée comme suit :
* dans une étape 120, l'analyseur détermine le type d'un message reçu en entrée ;
* dans une étape 140, et sur la base du type déterminé à l'étape 120, l'analyseur 12 détermine le protocole employé par le message, ainsi que les règles syntaxiques qui sont associées à ce protocole ;
* dans une étape 160, l'analyseur 12 utilise les règles obtenues à l'étape 140 pour réaliser une analyse lexicale du message et établir une représentation arborescente structurée correspondante ; et
* dans une étape 180, l'analyseur 12 stocke la représentation arborescente du message de l'étape 160 dans le stockage 18, en correspondance avec un identifiant de la source émettrice de ce message.

Ce type d'opérations peut être réalisé par de nombreux parseurs existants, par exemple du type LR, ou LL selon les règles syntaxiques du protocole considéré.

II existe des cas où certaines syntaxes peuvent être ambigües d'un point de vue sémantique pour les parseurs, c'est-à-dire qu'un parseur ne peut déterminer quelle règle syntaxique utiliser.

Pour prévenir ces situations, un parseur du type GLR sera préféré aux autres types de parseurs. Certaines modifications peuvent être nécessaires pour permettre de tenir compte des règles associées à chaque protocole. Un tel parseur peut être codé en langage Python de manière avantageuse.

Les étapes 120 et 140, pour déterminer les règles syntaxiques peuvent être omises, notamment lorsque l'on sait a priori quel protocole est utilisé.

Le tableau 1 ci-dessous représente un ensemble de règles syntaxiques qui peuvent caractériser un protocole en exemple.

**Tableau 1**

| **Elément** | **Syntaxe** | **Commentaire** |
|---|---|---|
| Message | ("Query" / "Reply") 1*SP Method | |
| Header | Header 1*SP 1*("(" Opt-Value ")" ) | |
| Opt-Value | (Ack 1 Value / Version) | |
| Method | 1*ALPHA | |
| Ack | "Ack" HCOLON 1*DIGIT | |
| Value | "Value" HCOLON 1*ALPHA | |
| Version | "Version" 1*SP DIGIT "." DIGIT | |
| ALPHA | %x41-5A / %x61-7A | A-Z/a-z |
| DIGIT | %x30-39 | 0-9 |
| HCOLON | *SP ":"*SP | |
| SP | %x20 | espace |

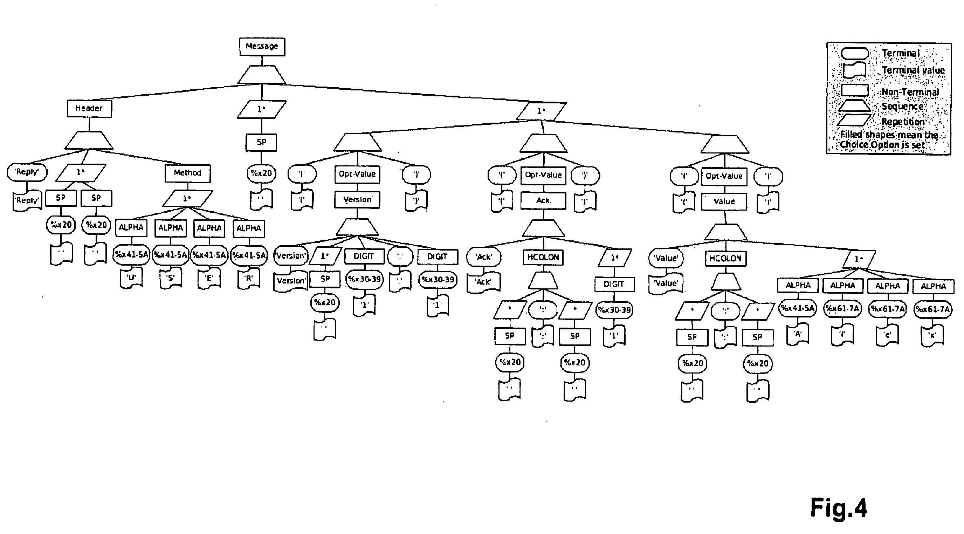

La figure 4 représente une structure arborescente obtenue en résultat du traitement du message en exemple ci-dessous par l'analyseur 12 avec les règles du tableau 1.

Message en exemple : Reply USER (Version 1.1)(Ack : 1)(Value: Alex)

Dans cette représentation arborescente, le message a été découpé en éléments syntaxiques conformément aux règles syntaxiques du protocole du tableau 1.

Ensuite, chaque élément a été placé dans un tableau selon un arbre n-aire qui obéit aux règles structurelles suivantes :
* un terminal est un noeud qui a un marqueur de nom associé et qui est une feuille. C'est-à-dire que la valeur de ce noeud est la fin de la branche, et que ce noeud n'a pas d'enfants.
* une séquence est un noeud qui a un marqueur de nom associé et qui a un nombre fixe de noeuds-enfants. Ce nombre fixe est associé au marqueur de ce noeud dans les règles syntaxiques du protocole.
* une répétition est un noeud qui a un marqueur de nom associé et qui a un ensemble de noeuds-enfants qui peut varier, qui sont délimités dans le message par des limites lexicales imposées par les règles du protocole. L'ordre dans lequel sont listés ces noeuds-enfants peut être caractéristique de la source.
* un non-terminal est un noeud qui a un marqueur de nom associé et qui a un enfant unique qui peut être de l'un quelconque des types, c'est-à-dire un terminal, une séquence, une répétition ou un non-terminal.
* un choix définit un choix entre plusieurs valeurs possibles prédéfinies et est marqué par un indicateur. Le rôle de cette catégorie de noeud apparaîtra mieux avec la suite.

Cette représentation arborescente peut être enregistrée par exemple sous la forme d'un fichier XML, ce qui permettra par la suite une comparaison rapide et efficace de représentations arborescentes entre elles.

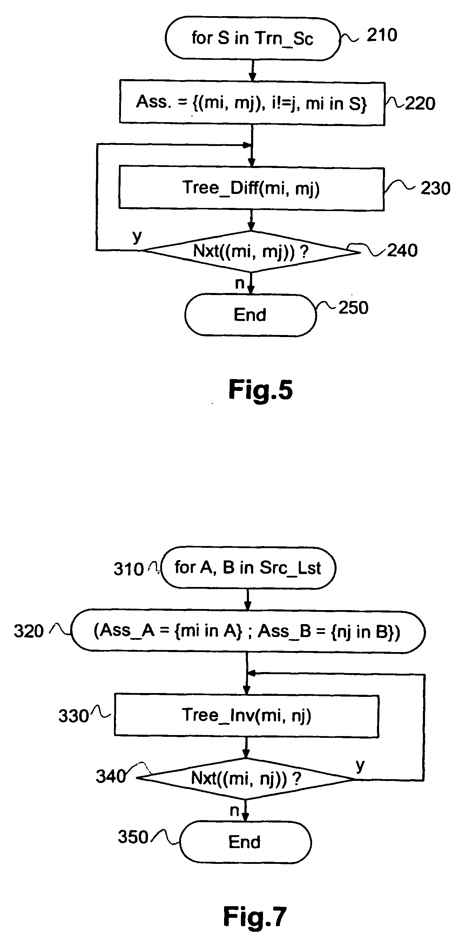

La figure 5 représente une mise en oeuvre particulière de l'étape 200 de la figure 2.

Cette mise en oeuvre comporte une étape 210 dans laquelle une source S est choisie parmi les sources distinctes du jeu d'entraînement.

L'étape 210 représente en fait une boucle, c'est-à-dire que les étapes suivantes sont répétées pour chacune des sources dans le jeu d'entraînement.

Pour cela, on peut envisager aussi bien, une mise en oeuvre séquentielle, c'est-à-dire avec traitement de chaque source l'une après l'autre, qu'une mise en oeuvre parallèle, c'est-à-dire avec traitement de plusieurs sources de manière simultanée par des ressources matérielles distinctes.

Pour une source S choisie dans l'étape 210, le discriminateur 14 sélectionne toutes les représentations arborescentes structurées dans le stockage 18 qui sont associées à la source S.

Sur la base de ces représentations, le discriminateur 14 génère un ensemble de couples Ass dans une étape 220. Ces couples contiennent à chaque fois deux identifiants distincts de représentations arborescentes, et ils sont établis de sorte que tous les couples de messages issus de la source S réalisables sont représentés dans l'ensemble Ass.

On notera que dans ce qui précède et dans la suite, on peut par endroit parler de représentation arborescente et de message de manière indistincte, dans la mesure où une représentation arborescente correspond à un message donné et inversement.

Ensuite une boucle est mise en oeuvre, dans laquelle une fonction Tree_Diff() est exécutée dans une étape 230 avec chaque couple de représentations (mi ; mj) de l'ensemble Ass.

La fonction Tree_Diff() a pour résultat la détermination d'une liste de variances entre les messages qu'elle reçoit en argument. Il n'est pas nécessaire de passer directement en argument les messages ou les représentations arborescentes associées. II suffit de passer une référence, comme un identifiant ou un pointeur vers un noeud particulier.

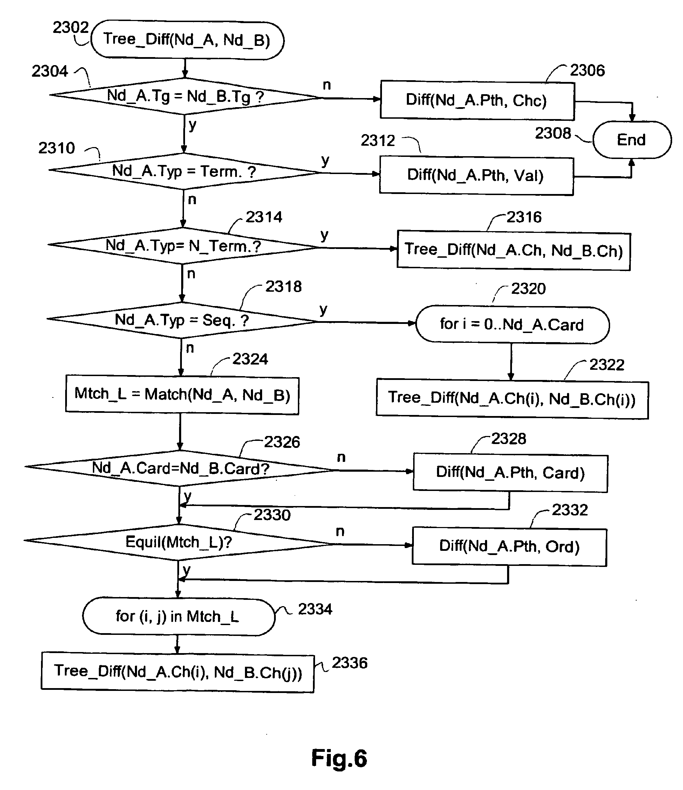

Plus précisément, et comme cela apparaîtra avec la figure 6, la fonction Tree_Diff() décrite ici reçoit comme arguments des pointeurs vers les noeuds principaux de chacune des représentations arborescentes de chaque couple.

La boucle est répétée tant qu'une condition d'arrêt 240 portant sur le fait qu'il reste ou non un couple de messages à comparer dans l'ensemble Ass. Lorsque c'est le cas, la boucle se termine en 250.

La figure 6 représente une mise en oeuvre en exemple de la fonction Tree_Diff() de l'étape 230.

Dans l'exemple décrit ici, la fonction Tree_Diff() profite de la nature arborescente des représentations structurées pour adopter une forme récursive, qui est particulièrement adaptée à ce genre de problèmes. II serait également possible de mettre en oeuvre cette fonction de manière itérative ou autre.

Comme cela apparaîtra plus bas, la fonction Tree_Diff() utilise le fait que chacun des noeuds ne peut être que de quatre natures distinctes : terminal, séquence, répétition ou non-terminal. Sur cette base, elle traite les noeuds en définissant à chaque fois des différences qui sont caractéristiques de chaque type de noeud.

Du fait que la fonction Tree_Diff() est récursive, on a représenté sur la figure 6 les étapes de récursion à partir d'une paire de noeuds données Nd_A et Nd_B (opération 2302).

Comme on l'a vu plus haut, la fonction Tree_Diff() est appelée avec les deux noeuds principaux des représentations arborescentes que l'on souhaite comparer, et les représentations seront explorées grâce aux appels récursifs inclus.

Une récursion part donc en 2302 d'un couple de noeuds Nd_A et Nd_B. La récursion commence en 2304 par un test qui compare les marqueurs des noeuds Nd_A et Nd_B.

Si ces marqueurs sont distincts, cela signifie que l'on a affaire à deux branches totalement distinctes. Dès lors, une fonction Diff() est appelée en 2306 avec comme arguments un pointeur vers Nd_A, ainsi qu'une chaîne de caractères "Chc".

Ensuite, la récursion se termine en 2308, car il n'y a plus de sens à comparer les sous-branches des noeuds Nd_A et Nd_B.

La fonction Diff() est une fonction qui reçoit en arguments un pointeur, et une chaîne de caractère.

Le pointeur correspond au chemin à suivre dans une représentation arborescente pour atteindre les noeuds dont on a détecté la différence, et ce pointeur peut être considéré comme un "chemin partiel". Un chemin partiel est donc un chemin dans l'arborescence, qui mène du noeud principal à un noeud choisi.

La chaîne de caractère est utilisée pour indiquer à la fonction Diff() quelle est la nature de la différence qui a été identifiée, et comment stocker cette différence dans la liste de variances.

Lorsque la valeur de la chaîne est "Chc", cela signifie que la différence porte sur le marqueur associé à chacun de ces noeuds. Dans ce cas, la fonction Diff() stocke le chemin partiel des noeuds, et lui associe la valeur des deux marqueurs.

Lorsque la valeur de la chaîne est "Val", cela signifie que les noeuds Nd_A et Nd_B sont des noeuds terminaux, et que la fonction Diff() doit comparer la valeur associée à ces noeuds. S'ils ont une valeur différente, le chemin partiel est stocké, en association avec les deux valeurs distinctes.

Lorsque la valeur de la chaîne est "Card", cela signifie que les noeuds Nd_A et Nd_B sont des noeuds de type répétition, et que ces répétitions comportent un nombre distinct d'éléments. En résultat, la fonction Diff() stocke le chemin partiel de ces messages, en association avec ces deux longueurs distinctes.

Enfin, lorsque la valeur de la chaîne est "Ord", cela signifie que les noeuds Nd_A et Nd_B sont des noeuds de type répétition, et que ces répétitions comportent des éléments qui sont placés dans un ordre différent. En résultat, la fonction Diff() stocke le chemin partiel de ces messages, en association avec une signature caractéristique de l'ordre, qui sera explicitée plus bas.

Pour stocker toutes ces différences, la fonction Diff() peut procéder de diverses manières.

Une méthode particulièrement efficace est d'utiliser une liste dans laquelle sont stockés des triplets formés à chaque fois :
* d'un chemin partiel qui correspond à un chemin partiel pour lequel une différence a été trouvée entre deux messages,
* le type de différence détectée, et
* une liste de valeurs associée à ce chemin partiel, qui contient l'ensemble des valeurs qui constituent cette différence comme défini plus haut.

Cette liste sera appelée par suite List_Var, et elle peut être stockée dans l'un quelconque des stockages 18 et 20.

II faut comprendre ici que l'on cherche à enregistrer toutes les différences qui existent entre les messages, afin de mieux mettre en valeur les éléments constants dans une étape ultérieure.

Lorsque la fonction Diff() cherche à entrer une nouvelle différence dans la liste List_Var, il se peut que cette différence soit déjà présente.

La fonction Diff() peut être programmée pour détecter ce type d'occurrence (par exemple en utilisant une liste ordonnée) et par conséquent n'entrer une différence que lorsqu'elle est nouvelle.

En variante, la fonction Diff() peut être programmée pour progresser rapidement en stockant toutes les différences, qu'elles soient déjà présentes ou non.

En outre, la fonction Diff() peut être programmée pour stocker dans la liste List_Var un indicateur de la source pour laquelle chaque différence a été identifiée.

En variante, cet indicateur peut être remplacé par l'utilisation de plusieurs listes de valeurs dans un ordre implicite pour chaque chemin partiel, un caractère spécial (par exemple '0') indiquant lorsqu'une source ne présente pas une différence donnée.

Dans le cas où les noeuds Nd_A et Nd_B ont des marqueurs identiques, la récursion se poursuit dans une opération 2310, dans laquelle il est déterminé si les noeuds Nd_A et Nd_B sont des noeuds terminaux.

Si c'est le cas, la fonction Diff() est appelée dans une opération 2312 avec la chaîne de caractères "Val" pour gérer le cas où la valeur associée aux noeuds est distincte, puis la récursion se termine en 2308.

Lorsque les noeuds Nd_A et Nd_B ne sont pas des noeuds terminaux, la récursion se poursuit dans une opération 2314, dans laquelle il est déterminé si les noeuds Nd_A et Nd_B sont des noeuds non-terminaux.

Si c'est le cas, une nouvelle récursion de la fonction Tree_Diff() est lancée dans une opération 2316, sur les noeuds-enfants uniques des noeuds Nd_A et Nd_B.

Lorsque les noeuds Nd_A et Nd_B ne sont pas des noeuds non-terminaux, la récursion se poursuit dans une opération 2318, dans laquelle il est déterminé si les noeuds Nd_A et Nd_B sont des noeuds séquences.

Si c'est le cas, une série de nouvelles récursions de la fonction Tree_Diff() est lancée par une boucle 2320, sur les noeuds-enfants des noeuds Nd_A et Nd_B (opération 2322). II y a autant de nouvelles récursions lancées qu'il y a d'éléments dans la séquence.

Si les noeuds Nd_A et Nd_B ne sont d'aucun des types précédents, alors ils sont des noeuds répétitions. La récursion établit donc dans une opération 2324 une liste Mtch_L qui comporte une liste de permutations des éléments des répétitions de Nd_A et Nd_B.

La liste Mtch_L est établie au moyen d'une fonction Match(), qui analyse les éléments de la répétition de Nd_A d'une part et de Nd_B d'autre part, et associe ces éléments par paire lorsqu'ils se correspondent.

Pour déterminer que deux éléments sont correspondants, la fonction Match() analyse le contenu de ceux-ci. Cette analyse est basée sur un sous-ensemble choisi de l'arborescence associée à ces éléments.

Plus précisément, la fonction Match() effectue les opérations suivantes sur chaque élément :
* déterminer les sous-chemins partiels qui correspondent à des choix ;
* déterminer les sous-chemins partiels qui correspondent à des éléments particuliers à l'élément concerné, c'est-à-dire non imposés par la syntaxe du protocole.

Par "sous-chemin", on entend la partie d'un chemin partiel située après le noeud correspondant à l'élément traité par la fonction Match(). L'ensemble du premier élément et celui du deuxième élément sont alors comparés pour définir leur intersection et leur réunion. Le rapport entre la cardinalité de l'intersection et la cardinalité de la réunion définit le degré de similitude de ces éléments.

Deux éléments sont considérés comme correspondants lorsque leur degré de similitude est supérieur à un seuil choisi. Deux éléments correspondants sont stockés sous la forme d'une paire d'indices indiquant leur position respective dans l'intersection définie ci-dessus. Cette position peut être obtenue grâce aux calculs de degré de similitude entre d'une part les éléments de la répétition Nd_A (respectivement Nd_B), et d'autre part les éléments de l'intersection.

Ensuite, la cardinalité des répétitions Nd_A et Nd_B est testée dans une opération 2326. Si ces deux répétitions ont un nombre distinct d'éléments, alors la fonction Diff() est appelée en 2328 avec la chaîne "Card" pour stocker cette différence.

Ensuite, (ou lorsque les répétitions Nd_A et Nd_B ont la même cardinalité), une fonction Equil() est appelée dans une opération 2330 pour déterminer si les répétitions Nd_A et Nd_B ont des éléments correspondants qui sont permutés. Cela peut par exemple être réalisé en analysant si la liste Mtch_Lst comprend un couple dont les indices sont distincts.

Si c'est le cas, la fonction Diff() est appelée dans une opération 2332 avec la chaîne de caractère "Ord", et cette fonction établit une signature des noeuds Nd_A et Nd_B pour stocker une différence reflétant cette permutation.

La signature des noeuds est établie comme suit :
* l'intersection des ensembles de sous-chemin partiels décrits ci-dessus est stockée comme ensemble de référence associé à ce sous-chemin ;
* chaque couple de la liste Mtch_L est comparé avec les éléments de l'ensemble de référence par calcul du degré de similitude, et deux listes (une pour Nd_A et une pour Nd_B) sont établies qui contiennent les indices des éléments de Mtch_L classés dans l'ensemble de référence.

Ensuite, (ou lorsque les répétitions Nd_A et Nd_B ne présentent pas de permutations), la récursion se poursuit par une boucle 2334, qui lance une série de nouvelles récursions de la fonction Tree_Diff() sur les noeuds désignés par les couples de la liste Mtch_Lst.

Si la liste Mtch_Lst ne contient aucun couple (c'est-à-dire qu'aucun élément des répétitions de Nd_A et Nd_B ne peuvent être associés), la récursion se termine.

Comme on peut le voir dans ce qui précède, les représentations arborescentes sont parcourues de manière récursive, en stockant à chaque fois la différence de niveau le plus élevé le cas échéant.

Une fois que tous les messages du jeu d'entraînement ont été comparés entre pour chacune des sources, la liste Lst_Var est complète et disponible pour la génération d'empreinte de l'étape 300.

La figure 7 représente une mise en oeuvre particulière de l'étape 300. Cette mise en oeuvre est similaire à la mise en oeuvre de l'étape 200 de la figure 5.

Ainsi une boucle est lancée en 310, qui établit tous les couples de sources possibles et réalise les étapes suivantes avec tous ces couples.

Pour chaque couple de sources, l'ensemble des représentations structurées des sources A et B sont recueillies dans des ensembles respectifs Ass(A) et Ass(B) dans une étape 320.

Ensuite une boucle est mise en oeuvre, dans laquelle une fonction Tree_Inv() est exécutée dans une étape 330 avec chaque couple de représentations (mi ; nj) des ensembles Ass(A) et Ass(B).

Ainsi, les messages de A et les messages de B sont tous comparés entre eux, et la fonction Tree_Inv() établit une liste Lst-Inv qui contient un motif d'invariants accompagnés de valeurs qui représentent des signatures pour chaque source.

La nature de cette liste et son établissement apparaîtront plus clairement avec la description de la figure 8.

La boucle est répétée tant qu'une condition d'arrêt 340 portant sur le fait qu'il reste ou non un couple de messages à comparer dans les ensembles Ass(A) et Ass(B). Lorsque c'est le cas, la boucle se termine en 350.

Une mise en oeuvre particulière de la fonction Tree_Inv() va maintenant être décrite avec la figure 8.

La fonction Tree_Inv() et la fonction Tree_Diff() sont mises en oeuvre de manière totalement parallèle. En fait, ces fonctions sont identiques dans les tests qu'elles réalisent et dans les récursions qu'elles génèrent. En fait, la seule différence est que la fonction Tree_Inv() appelle une fonction Feat() là où la fonction Tree_Diff() appelle la fonction Diff().

Par conséquent, les étapes de la fonction Tree_Inv() ne seront pas détaillées plus avant ici, et seules les différences entre les fonctions Diff() et Feat() seront expliquées. En résultat, il faut considérer que la description des opérations de la figure 8 dont la référence est 33xy est similaire à celle des opérations de la figure 6 dont la référence est 23xy.

La fonction Feat() diffère de la fonction Diff() en ce qu'elle vient stocker les différences de champs statiques entre les messages des différentes sources au lieu des différences de nature dynamique dans le cas de la fonction Diff().

En effet, une différence identifiée dans une récursion de la fonction Tree_Inv() n'est stockée dans la liste Lst_Inv que si cette différence n'est pas comprise dans la liste Lst_Var.

En outre, la fonction Feat() reçoit les identifiants des sources émettrices de ces messages, pour leur stockage en correspondance des valeurs de différence qui sont stockées.

Les différences stockées sont en revanche identiques dans leur établissement, qu'il s'agisse d'une différence de type "Chc", "Val", "Card" ou "Ord". La description de l'établissement de ces différences s'applique donc à l'identique.

Les comparaisons successives des étapes 200 et 300 peuvent être vues comme suit :
* les comparaisons de l'étape 200 déterminent les différences entre les messages issus de mêmes sources. Les champs de message comparés sont de nature statique ou dynamique. Comme les messages sont issus des mêmes sources, les différences qui sont ainsi isolées sont de nature dynamique ;
* les comparaisons de l'étape 300 déterminent les différences entre les messages issus de sources distinctes. Les différences obtenues caractérisent donc des champs à la fois statiques et dynamiques. Cependant, comme dans la fonction Feat() les différences identifiées dans l'étape 200 (dynamiques) ne sont pas retenues, seules les différences de nature statique sont retenues, qui caractérisent donc bien chaque source.

On notera par ailleurs que, comme ces comparaisons sont basées sur la retenue des différences, les champs de message de nature statique qui sont traités identiquement par toutes les sources sont naturellement éliminés de la sélection car ils ne constituent pas des différences.

En outre, cela permet également de ne pas retenir comme différence un champ qui est statique pour une source et dynamique pour une autre, ce qui permet de limiter les erreurs de classifications.

Ces comparaisons sont donc fondées sur la syntaxe des messages et non sur leur lexique. Cela constitue un avantage considérable obtenu grâce à l'invention.

D'autre part, la variété des différences qui sont identifiées par l'invention offre une analyse qui permet ensuite une analyse sémantique du message.

A la fin, la liste Lst_Inv est donc relativement similaire à la liste Lst_Var, sauf qu'elle contient des chemins partiels qui caractérisent les sources, et des listes de valeurs pour cette différence pour chaque source. Les sources sont à chaque fois identifiées, soit par un identifiant, soit par un ordre implicite.

L'homme du métier saura adapter les variantes de mise en oeuvre présentées avec la liste Lst_Var à la liste Lst_Inv, ainsi que pour les fonctions qui leur sont associées.

II serait également possible en variante de modifier la fonction Diff() et la liste Lst_Var et de ne stocker que les chemins partiels des différences et les types de différence.

Dans ce cas, les listes Lst_Var et Lst_Inv deviennent un peu plus différentes, comme la liste Lst_Inv stocke toujours les valeurs des différences associées à chaque source.

La liste Lst_Inv peut en outre être stockée dans le stockage 20 ou dans un autre stockage, pour la classification ultérieure de messages du système de communication 2.

La figure 9 représente un procédé mis en oeuvre par l'analyseur 12 et l'inspecteur 16 dans la phase d'exécution.

Ce procédé comporte deux étapes principales :
* une étape 400 dans laquelle l'analyseur établit la représentation arborescente structurée d'un nouveau message ;
* une étape 500 dans laquelle l'inspecteur applique la liste Lst_Inv à la représentation établie à l'étape 400 pour classifier le nouveau message comme ayant été émis par une source identifiée.

La figure 10 montre une mise en oeuvre particulière de l'étape 500.

L'étape 500 commence par une boucle 510 qui applique répétitivement une étape 520 pour chacune des sources ayant une signature dans la liste Lst_Inv.

L'étape 520 applique une fonction Calc_Rk() qui prend comme arguments une signature de la liste Lst_Inv et la représentation structurée du message inspecté, et écrit dans un tableau Rk[] une valeur de correspondance.

Cela permet de réaliser une méthode de classification par les plus proches voisins.

Enfin, dans une étape 530, l'identifiant de la source qui a le rang le plus élevé dans le tableau Rk[] est renvoyé.

Une autre application de l'identification des sources des messages est dans les pare-feux logiciels ou autres.

En effet, il est classique que certains micrologiciels présentent des failles et pas d'autres. II peut donc être intéressant de bloquer des messages lorsqu'ils correspondent à des failles connues pour des micrologiciels connus.

D'une manière générale, l'invention permet une identification qui rend possible un raffinement du traitement de messages pour leur routage, en fonction de l'émetteur ou du destinataire du message.

Une autre application est la signature logicielle. Certains logiciels peuvent être utilisés pour générer du code de programme qui est utilisé pour l'envoi de communications conformément à un protocole.

L'analyse de tels messages permettra donc de déterminer si un tel logiciel générateur de code de programme a été utilisé pour l'émission de ces messages.

D'un point de vue matériel, l'invention a été présentée en référence à des stockages distincts. Cette distinction a été présentée à des fins d'explication. Ces stockages peuvent être situés sur un même volume logique ou physique, qui peut être de tout type connu pour le stockage de données.

De même, les éléments représentés peuvent être regroupés ou au contraire répartis, et de nature matérielle, comme dans le cadre d'une application aux télécommunications ou de nature logicielle, en fonction de la couche d'abstraction à laquelle l'invention est rattachée ou dans le cadre de l'application à des systèmes de communication logiciels.

En outre, dans ce qui précède, il conviendra d'apprécier que toutes les variantes peuvent être combinées entre elles dans la mesure de leur compatibilité. Bien que des modes préférés aient été présentés, il va de soi que l'invention englobe l'ensemble de ces variantes et leur combinaison.

Un exemple particulier concerne le moniteur. Bien que celui ait été ici présenté comme unitaire en ce qui concerne la phase d'entraînement et d'exécution, il apparaît clairement qu'il pourrait être composé de deux éléments distincts, l'un pour l'entraînement et l'autre pour la classification.

L'invention couvre également, en tant que produits, les éléments logiciels décrits, mis à disposition sous tout "medium" (support) lisible par ordinateur. L'expression "medium lisible par ordinateur" comprend les supports de stockage de données, magnétiques, optiques et/ou électroniques, aussi bien qu'un support ou véhicule de transmission, comme un signal analogique ou numérique.

De tels supports couvrent aussi bien les éléments logiciels en eux même, c'est-à-dire les éléments propres à être exécutés directement, que les éléments logiciels qui servent à l'installation et/ou le déploiement, comme lorsque un disque d'installation ou un programme d'installation téléchargeable. Une telle installation peut être réalisée de manière globale, sur des postes clients et des postes serveurs, ou de manière séparée, avec à chaque fois des produits appropriés.

## Revendications

1. Moniteur de système de communication par messages, comprenant un inspecteur (16) capable d'inspecter un message, et un analyseur (12) capable d'inspecter un flux de communication, pour en tirer une représentation structurée de messages, en correspondance d'une pluralité de règles, **caractérisé en ce que** l'inspecteur (16) est agencé pour :
* identifier la source émettrice du message inspecté en comparant une signature tirée de la représentation structurée du message inspecté à des motifs de référence associés respectivement aux sources, un motif de référence associé respectivement à une source caractérisant sélectivement l'implémentation d'un protocole de communication par ladite source.

2. Moniteur de système de communication par messages,comprenant un analyseur (12) capable d'inspecter un flux de communication, pour en tirer une représentation structurée de messages, en correspondance d'une pluralité de règles, **caractérisé en ce qu'**il comprend :
* un discriminateur (14) capable de comparer des représentations structurées intéressant plusieurs sources de messages, pour en tirer des motifs sélectifs de sources respectives, un motif de référence associé respectivement à une source caractérisant sélectivement l'implémentation d'un protocole de communication par ladite source.

3. Moniteur selon la revendication 2 **caractérisé en ce que** le discriminateur comprend :
* un comparateur, capable d'exploiter un jeu de représentations structurées de messages en provenance de la même source, et d'y déterminer un jeu de différences dynamiques par comparaisons entre les représentations structurées de ce jeu,
* un déducteur, capable de comparer des jeux de représentations structurées de messages en provenance de sources différentes, et d'éliminer les différences partagées avec les jeux de différences dynamiques associés à ces sources, afin d'établir un jeu de différences statiques formant motifs sélectifs.

4. Moniteur selon la revendication 1, 2 ou 3, dans lequel un motif de référence associé respectivement à une source a été déterminé par comparaison de représentations structurées de messages provenant de différentes sources.

5. Moniteur selon l'une des revendications 2 à 4 **caractérisé en ce qu'**un motif sélectif comporte un jeu de valeurs caractéristique d'une source distincte.

6. Moniteur selon l'une des revendications 2 à 5, **caractérisé en ce qu'**un motif sélectif comprend un ensemble de chemins dans la représentation structurée.

7. Moniteur selon l'une des revendications 2 à 6, **caractérisé en ce que** la représentation structurée d'un message est un arbre n-aire.

8. Moniteur selon la revendication 7, **caractérisé en ce que** les noeuds de l'arbre sont établis en fonction de la pluralité de règles.

9. Moniteur selon la revendication 8, **caractérisé en ce que** certaines au moins des règles sont basées sur la syntaxe des messages d'un protocole de communication utilisé par les messages.

10. Moniteur selon la revendication 9, **caractérisé en ce que** certaines au moins des règles sont basées sur la sémantique du protocole de communication utilisé par les messages.

11. Procédé d'analyse de communication par messages, comprenant :
a) l'établissement de motifs sélectifs de sources distinctes,
b) l'analyse d'un nouveau message pour l'associer à l'une des sources distinctes, dans lequel l'étape a. comporte :
a1) l'inspection d'une pluralité de messages pour en tirer des représentations structurées en correspondance d'une pluralité de règles,
a2) la recherche de motifs sélectifs de source, à partir de la comparaison de représentations structurées intéressant plusieurs sources, un motif sélectif de source caractérisant sélectivement l'implémentation d'un protocole de communication par ladite source,
et dans lequel l'étape b) comporte :
b1) l'association du nouveau message à l'une des sources en comparant les motifs sélectifs à une signature tirée de la représentation structurée associée de ce nouveau message.

12. Procédé selon la revendication 11, **caractérisé en ce que** l'étape a2) comprend :
a21) la comparaison de représentations structurées de messages en provenance de la même source, pour en tirer un jeu de différences dynamiques,
a22) la répétition de l'étape a21) pour au moins une autre source,
a23) la comparaison de représentations structurées de messages en provenance de sources différentes, et
a24) l'élimination des différences partagées avec les jeux de différences dynamiques associés à ces sources pour en tirer un jeu de différences statiques formant les motifs sélectifs.

## Claims

1. Monitor for a system for communication by messages, comprising an inspector (16) capable of inspecting a message, and an analyser (12) capable of inspecting a communication flow, for deriving therefrom a structured representation of messages, in accordance with a pluralité of rules, **characterised in that** the inspector (16) is arranged to:
* identify the emitting source of the inspected message by comparing a signature, which is derived from the structured representation of the inspected message, with reference motifs respectively associated with the sources, a reference motif respectively associated with a source selectively characterising the implementation of a communication protocol by said source

2. Monitor for a system for communication by messages, comprising an analyser (12) capable of inspecting a communication flow, for deriving therefrom a structured representation of messages, in accordance with a plurality of rules, **characterised in that** it comprises:
* a discriminator (14) capable of comparing structured representations relating to a plurality of sources of messages, for deriving therefrom selective motifs of respective sources, a reference motif respectively associated with a source selectively characterising the implementation of a communication protocol by said source.

3. Monitor according to claim 2, **characterised in that** the discriminator comprises:
* a comparator capable of operating on a set of structured representations of messages originating from the same source and of determining therefrom a set of dynamic differences by comparisons between the structured representations of that set,
* a deductor capable of comparing sets of structured representations of messages originating from different sources and of eliminating the differences shared with the sets of dynamic differences associated with those sources, in order to establish a set of static differences forming selective motifs.

4. Monitor according to claim 1, 2 or 3, wherein a reference motif respectively associated with a source has been determined by comparing structured representations of messages originating from different sources.

5. Monitor according to one of claims 2 to 4; **characterised in that** a selective motif includes a set of values which is characteristic of an individual source.

6. Monitor according to one of claims 2 to 5, **characterised in that** a selective motif comprises a set of paths in the structured representation.

7. Monitor according to one of claims 2 to 6, **characterised in that** the structured representation of a message is an n-ary tree.

8. Monitor according to claim 7, **characterised in that** the nodes of the tree are established as a function of the plurality of rules.

9. Monitor according to claim 8, **characterised in that** at least some of the rules are based on the syntax of the messages of a communication protocol used by the messages.

10. Monitor according to claim 9, **characterised in that** at least some of the rules are based on the semantics of the communication protocol used by the messages.

11. Method of analysing communication by messages, comprising:
a) establishing selective motifs of individual sources,
b) analysing a new message for associating it with one of the individual sources,
wherein step a includes:
a1) inspecting a plurality of messages for deriving therefrom structured representations in accordance with a plurality of rules,
a2) searching for selective source motifs, starting from comparison of structured representations relating to a plurality of sources, a selective source motif selectively characterising the implementation of a communication protocol by said source,
and wherein step b) includes:
b1) associating the new message with one of the sources by comparing the selective motifs with a signature derived from the associated structured representation of that new message.

12. Method according to claim 11, **characterised in that** step a2) comprises:
a21) comparing structured representations of messages originating from the same source, for deriving therefrom a set of dynamic differences,
a22) repeating step a21) for at least one other source,
a23) comparing structured representations of messages originating from different sources, and
a24) eliminating the differences shared with the sets of dynamic differences associated with those sources in order to derive therefrom a set of static differences forming the selective motifs.

## Patentansprüche

1. Monitor für ein Nachrichten-Kommunikationssystem, aufweisend eine Prüfeinrichtung (16), die zum Prüfen einer Nachricht geeignet ist, und einen Analysator (12), der zum Prüfen eines Kommunikationsflusses geeignet ist, um daraus eine strukturierte Darstellung von Nachrichten entsprechend einer Mehrzahl von Regeln abzuleiten, **dadurch gekennzeichnet, dass** die Prüfeinrichtung (16) eingerichtet ist zum
• Identifizieren der Senderquelle der geprüften Nachricht mittels Vergleichens einer aus der strukturierten Darstellung der geprüften Nachricht abgeleiteten Signatur mit den Quellen jeweils zugeordneten Referenzmustern, wobei ein jeweils einer Quelle zugeordnetes Referenzmuster wahlweise die Implementierung eines Kommunikationsprotokolls durch die Quelle kennzeichnet.

2. Monitor für ein Nachrichten-Kommunikationssystem, aufweisend einen Analysator (12), der zum Prüfen eines Kommunikationsflusses geeignet ist, um daraus eine strukturierte Darstellung von Nachrichten entsprechend einer Mehrzahl von Regeln abzuleiten, **dadurch gekennzeichnet, dass** er aufweist:
• einen Diskriminator (14), der zum Vergleichen von mehrere Nachrichtenquellen interessierenden strukturierten Darstellungen geeignet ist, um daraus selektive Muster jeweiliger Quellen abzuleiten, wobei ein jeweils einer Quelle zugeordnetes Referenzmuster wahlweise die Implementierung eines Kommunikationsprotokolls durch die Quelle kennzeichnet.

3. Monitor gemäß Anspruch 2, **dadurch gekennzeichnet, dass** der Diskriminator aufweist:
• eine Vergleichseinrichtung, die zum Auswerten eines Satzes von strukturierten Darstellungen von Nachrichten aus der gleichen Quelle und zum Ermitteln in diesen eines Satzes von dynamischen Unterschieden durch Vergleiche zwischen den strukturierten Darstellungen des Satzes in der Lage ist,
• eine Ableitungseinrichtung, die zum Vergleichen von Sätzen strukturierter Darstellungen von Nachrichten aus verschiedenen Quellen und zum Löschen der Unterschiede, die mit den Sätzen dynamischer Unterschiede geteilt werden, die den Quellen zugeordnet sind, in der Lage ist, um einen Satz statischer Unterschiede zu erstellen, die selektive Muster bilden.

4. Monitor gemäß Anspruch 1, 2 oder 3, wobei ein jeweils einer Quelle zugeordnetes Referenzmuster mittels Vergleichens strukturierter Darstellungen von Nachrichten aus verschiedenen Quellen ermittelt wurde.

5. Monitor gemäß einem der Ansprüche 2 bis 4, dadurch gekennzeichet, dass ein selektives Muster einen Satz von Werten aufweist, der für eine andere Quelle charakteristisch ist.

6. Monitor gemäß einem der Ansprüche 2 bis 5, **dadurch gekennzeichnet, dass** ein selektives Muster eine Menge von Pfaden in der strukturierten Darstellung aufweiset.

7. Monitor gemäß einem der Ansprüche 2 bis 6, **dadurch gekennzeichnet, dass** die strukturierte Darstellung einer Nachricht ein n-ärer Baum ist.

8. Monitor gemäß Anspruch 7, **dadurch gekennzeichnet, dass** die Knoten des Baumes in Abhängigkeit von der Mehrzahl von Regeln vorgesehen sind.

9. Monitor gemäß Anspruch 8, **dadurch gekennzeichnet, dass** zumindest einige der Regeln auf der Syntax der Nachrichten eines von den Nachrichten verwendeten Kommunikationsprotokolls basieren.

10. Monitor gemäß Anspruch 9, **dadurch gekennzeichnet, dass** zumindest einige der Regeln auf der Semantik des von den Nachrichten verwendeten kommunikationsprotokolls basieren.

11. Verfahren zum Analysieren einer Nachrichtenkommunikation, aufweisend:
a) Erstellen von selektiven Mustern verschiedener Quellen,
b) Analysieren einer neuen Nachricht, um diese einer der verschiedenen Quellen zuzuordnen, wobei der Schritt a) aufweist:
a1) Prüfen einer Mehrzahl von Nachrichten, um daraus strukturierte Darstellungen entsprechend einer Mehrzahl von Regeln abzuleiten,
a2) Suchen nach selektiven Quellenmustern ausgehend von dem Vergleich von strukturierten Darstellungen, die mehrere Quellen interessieren, wobei ein selektives Quellenmuster wahlweise das Implementieren eines Kommunikationsprotokolls durch die Quelle kennzeichnet,
und wobei Schritt b) aufweist:
b1) Zuordnen der neuen Nachricht zu einer der Quellen durch Vergleichen der selektiven Muster mit einer Signatur, die aus der strukturierten Darstellung abgeleitet wird, die der neuen Nachricht zugeordnet ist.

12. verfahren gemäß Anspruch 11, **dadurch gekennzeichnet, dass** der Schritt a2) aufweist:
a21) Vergleichen von strukturierten Darstellungen von Nachrichten aus der gleichen Quelle, um daraus einen Satz von dynamischen Unterschiede abzuleiten,
a22) Wiederholen des Schrittes a21) für mindestens eine andere Quelle,
a23) Vergleichen von strukturierten Darstellungen von Nachrichten, die aus verschiedenen Quellen stammen, und
a24) Löschen der Unterschiede, die mit den Sätzen dynamischer Unterschiede geteilt werden, die den Quellen zugeordnet sind, um daraus einen Satz statischer Unterschieden abzuleiten, die die selektiven Muster bilden.
